(19) **Europäisches Patentamt / European Patent Office / Office européen des brevets**

(11) **EP 3 876 340 A1**

(12) # EUROPEAN PATENT APPLICATION

(43) Date of publication:
08.09.2021   Bulletin 2021/36

(51) Int Cl.:
*H01M 50/403* (2021.01)   *H01M 10/052* (2010.01)
*H01M 50/426* (2021.01)   *H01M 50/46* (2021.01)

(21) Application number: 21158892.6

(22) Date of filing: 24.02.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  06.03.2020   JP 2020038451

(71) Applicant: **TOYOTA JIDOSHA KABUSHIKI KAISHA**
**TOYOTA-SHI, AICHI-KEN 471-8571 (JP)**

(72) Inventors:
• **MATSUNOBU, Kohei**
  **Toyota-shi, Aichi-ken, 471-8571 (JP)**
• **MINAKUCHI, Akio**
  **Toyota-shi, Aichi-ken, 471-8571 (JP)**

(74) Representative: **Winter, Brandl - Partnerschaft mbB**
**Alois-Steinecker-Straße 22**
**85354 Freising (DE)**

(54) **METHOD FOR PRODUCING SEPARATOR-INTEGRATED ELECTRODE**

(57)    Provided is a method with which a separator-integrated electrode can be easily produced using a water-insoluble polymer. The method for producing a separator-integrated electrode disclosed here includes the steps of: preparing a coating solution in which a water-insoluble polymer is dissolved in a mixed solvent containing a good solvent for the water-insoluble polymer and a poor solvent for the water-insoluble polymer; coating the coating solution on an electrode; and vaporizing and removing the mixed solvent from the coating solution coated on the electrode. A boiling point of the poor solvent is higher than a boiling point of the good solvent. A porous separator layer is formed by removing the mixed solvent through the vaporization and thereby forming pores.

FIG.1

**Description**

BACKGROUND OF THE INVENTION

1. Field of the Invention

The present disclosure relates to a method for producing a separator-integrated electrode. This application claims priority on the basis of Japanese Patent Application No. 2020-038451, which was filed on 06 March 2020, and the entire contents of that application are incorporated by reference in this specification.

2. Description of the Related Art

Typically, a secondary battery such as a lithium secondary battery includes an electrode body having a positive electrode, a negative electrode and a separator that insulates the positive electrode from the negative electrode. In the separator, a porous body made of a resin is used so as to allow permeation of an electrolyte solution. The resin that constitutes the separator is desirably a water-insoluble polymer from perspectives such as performance.

As a method for producing a separator, Japanese Patent Application Publication No. 2019-79822 describes a method of partially adding a non-solvent to a gel polymer solution, which is obtained by dissolving a gel polymer such as a vinylidene fluoride-hexafluoropropylene copolymer in a solvent, thereby causing phase separation, and coating the solution, which has undergone the phase separation, on a substrate, and then drying. In addition, Japanese Patent Application Publication No. 2019-79822 describes a method of coating a gel polymer solution, which is obtained by dissolving a gel polymer such as a vinylidene fluoride-hexafluoropropylene copolymer in a solvent, on a substrate, and immersing this in a non-solvent for the gelled polymer so as to cause phase separation, and then drying. In addition, Japanese Patent Application Publication No. 2019-79822 describes a method of coating a gel polymer solution, which is obtained by dissolving a gel polymer such as a vinylidene fluoride-hexafluoropropylene copolymer in a solvent, on a substrate, and then drying while spraying a non-solvent for the gelled polymer onto the coated solution so as to cause phase separation.

SUMMARY OF THE INVENTION

Meanwhile, a separator-integrated electrode in which a separator layer is provided on an electrode is known. The separator-integrated electrode has the advantage of facilitating production of electrode bodies. It is also desirable to facilitate production of such a separator-integrated electrode.

However, the production method of the related art has problems, e.g., difficulty in uniformly coating a solution, which has undergone phase separation, on an electrode, and a concern that immersing an electrode in a non-solvent or spraying a non-solvent onto an electrode may lead to adverse effects on the electrode by the non-solvent. Therefore, the production method of the related art is difficult to use for production of a separator-integrated electrode per se, and hence a porous substrate for a separator is actually used as a substrate in the disclosure of Japanese Patent Application Publication No. 2019-79822. In addition, immersing an electrode in a non-solvent leads to an increase in the number of processes required, and spraying of a non-solvent onto an electrode is difficult to control. Therefore, this production method is unsatisfactory in terms of ease of production.

Hence, the object of the present disclosure is to provide a method with which a separator-integrated electrode can be easily produced using a water-insoluble polymer.

The method for producing a separator-integrated electrode disclosed here includes the steps of: preparing a coating solution in which a water-insoluble polymer is dissolved in a mixed solvent containing a good solvent for the water-insoluble polymer and a poor solvent for the water-insoluble polymer; coating the coating solution on an electrode; and vaporizing and removing the mixed solvent from the coating solution coated on the electrode. A boiling point of the poor solvent is higher than a boiling point of the good solvent. A porous separator layer is formed by removing the mixed solvent through the vaporization and thereby forming pores.

Provided by such a configuration is a method with which a separator-integrated electrode can be easily produced using a water-insoluble polymer.

BRIEF DESCRIPTION OF THE DRAWINGS

FIG. 1 is a SEM photograph of a cross section of a separator-integrated electrode obtained in Example 1;
FIG. 2 is a SEM photograph of a cross section of a separator-integrated electrode obtained in Example 2;

FIG. 3 is a SEM photograph of a cross section of a separator-integrated electrode obtained in Example 3; and
FIG. 4 is a SEM photograph of a cross section of a separator-integrated electrode obtained in Example 4.

DESCRIPTION OF THE PREFERRED EMBODIMENTS

The method for producing a separator-integrated electrode of the present disclosure includes a step of preparing a coating solution in which a water-insoluble polymer is dissolved in a mixed solvent containing a good solvent for the water-insoluble polymer and a poor solvent for the water-insoluble polymer (hereinafter referred to as a "coating solution preparation step"); a step of coating the coating solution on an electrode (hereinafter referred to as a "coating solution coating step"); and a step of vaporizing and removing the mixed solvent from the coating solution coated on the electrode (hereinafter referred to as a "mixed solvent removal step"). Here, the boiling point of the poor solvent is higher than the boiling point of the good solvent. In the mixed solvent removal step, a porous separator layer is formed by removing the mixed solvent through vaporization to form pores.

First, an explanation will be given of the coating solution preparation step. In the present disclosure, the "good solvent for the water-insoluble polymer" is a solvent in which the solubility of the water-insoluble polymer at 25°C is 1 mass% or more. The solubility of the water-insoluble polymer in the good solvent at 25°C is desirably 2.5 mass% or more, more desirably 5 mass% or more, further desirably 7.5 mass% or more, and most desirably 10 mass% or more. It should be noted that the type of good solvent to be used in the present disclosure is selected, as appropriate, according to the type of water-insoluble polymer. It is possible to use a single good solvent in isolation or a mixed solvent obtained by mixing two or more types of good solvents.

In the present disclosure, the "poor solvent for the water-insoluble polymer" is a solvent in which the solubility of the water-insoluble polymer at 25°C is less than 1 mass%. The solubility of the water-insoluble polymer in the poor solvent at 25°C is desirably 0.5 mass% or less, more desirably 0.2 mass% or less, further desirably 0.1 mass% or less, and most desirably 0.05 mass% or less. The type of poor solvent to be used in the present disclosure is selected, as appropriate, according to the type of water-insoluble polymer. It is possible to use a single poor solvent in isolation or a mixed solvent obtained by mixing two or more types of poor solvents.

It is possible to use Hansen solubility parameters (HSP) in order to assess whether a specific solvent is a good solvent or a poor solvent for a specific polymer compound. For example, if the dispersion term, polarity term and hydrogen bonding term of the HSP of the polymer compound are denoted by $\delta_{D1}$, $\delta_{P1}$ and $\delta_{H1}$ respectively and the dispersion term, polarity term and hydrogen bonding term of the HSP of the solvent are denoted by $\delta_{D2}$, $\delta_{P2}$ and $\delta_{H2}$ respectively, the solubility of the polymer compound tends to increase as the distance Ra ($MPa^{1/2}$) between the HSP of the polymer compound and that of the solvent, as represented by the formula below, decreases.

$$Ra^2 = 4(\delta_{D1} - \delta_{D2})^2 + (\delta_{P1} - \delta_{P2})^2 + (\delta_{H1} - \delta_{H2})^2$$

In addition, if the interaction radius of the specific polymer compound is denoted by Ro, it is predicted that the polymer compound will be soluble if the ratio Ra/Ro is less than 1, partially soluble if the ratio Ra/Ro is 1, and insoluble if the ratio Ra/Ro is greater than 1.

Alternatively, it is possible to assess easily whether a specific solvent is a good solvent or a poor solvent for a specific polymer compound by carrying out a test involving mixing the polymer compound and the solvent in a sample bottle or the like.

The good solvent and the poor solvent are mixed and used as a homogeneous solvent. Therefore, the good solvent and the poor solvent are compatible with each other. In the present disclosure, the boiling point of the poor solvent being used is higher than the boiling point of the good solvent being used. From the perspective of enabling a homogeneous porous body having a relatively high porosity to be obtained easily, the boiling point of the poor solvent is desirably at least 10°C higher, and more desirably at least 90°C higher, than the boiling point of the good solvent. From the perspective of drying speed, the boiling point of the poor solvent is desirably lower than 300°C.

In the present disclosure, the term "water-insoluble polymer" means a polymer that has a solubility in water of less than 1 mass% at 25°C. The solubility of the water-insoluble polymer in water at 25°C is desirably 0.5 mass% or less, more desirably 0.2 mass% or less, and further desirably 0.1 mass% or less.

The "water-insoluble polymer" used in the coating solution preparation step is the same as the water-insoluble polymer that constitutes the separator layer. A polymer for which a good solvent and a poor solvent exist is used as the water-insoluble polymer. The type of water-insoluble polymer to be used is not particularly limited as long as a good solvent and a poor solvent for the polymer exist. Examples of water-insoluble polymers include olefin-based resins such as polyethylene and polypropylene; fluorine-based resins such as poly(vinyl fluoride), poly(vinylidene fluoride) and vinylidene fluoride-hexafluoropropylene copolymers; (meth)acrylic-based resins such as poly(methyl (meth)acrylate) and poly(ethyl (meth)acrylate); styrene-based resins such as polystyrene, styrene-acrylonitrile copolymers and acrylonitrile-butadiene-styrene copolymers; water-insoluble cellulose derivatives such as ethyl cellulose, cellulose acetate and cellulose propionate; vinyl chloride-based resins such as poly(vinyl chloride) and ethylene-vinyl chloride copolymers; and ethylene-vinyl alcohol copolymers. It is possible to use a polymer that has been rendered water-insoluble through modification of a water-soluble polymer. Of these, the water-insoluble polymer is desirably an aliphatic polymer compound (that is, a polymer compound having no aromatic ring) from the perspectives of usefulness of a porous body of the water-insoluble polymer and usefulness of a method for producing same. From the perspective of enabling a homogeneous porous body having a relatively high porosity to be obtained easily, the water-insoluble polymer is desirably an addition polymerization type polymer compound (that is, a polymer compound produced by polymerization of an ethylenically unsaturated double bond in a monomer having the ethylenically unsaturated double bond; for example, a vinyl-based polymer or vinylidene-based polymer). From the perspective of obtaining characteristics particularly suitable for a separator, the water-insoluble polymer is more desirably a vinylidene fluoride-hexafluoropropylene copolymer or an ethylene-vinyl alcohol copolymer, and is most desirably a vinylidene fluoride-hexafluoropropylene copolymer. A case where a separator-integrated electrode is formed using a vinylidene fluoride-hexafluoropropylene copolymer has advantages such as adhesion of a separator layer to an electrode being high, and a layering procedure and winding procedure for producing an electrode body being easy to implement.

The average degree of polymerization of the water-insoluble polymer is not particularly limited, but is desirably not less than 70 and not more than 500,000, and more desirably not less than 100 and not more than 200,000. It should be noted that the average degree of polymerization of the water-insoluble polymer can be determined using a publicly known method (for example, NMR measurements or the like).

Suitable good solvents and suitable poor solvents will now be explained in more detail using specific water-insoluble polymers as examples. The production method of the present disclosure can be advantageously carried out by using the good solvents and poor solvents explained below with the water-insoluble polymers given below. Moreover, it is possible to use one of the good solvents listed below in isolation, or a combination of two or more types thereof. It is possible to use one of the poor solvents listed below in isolation, or a combination of two or more types thereof.

1. Case Where Water-insoluble Polymer Is Vinylidene Fluoride-hexafluoropropylene Copolymer

A vinylidene fluoride-hexafluoropropylene copolymer (PVDF-HFP) is a copolymer that contains vinylidene fluoride units and hexafluoropropylene units as monomer units. The copolymerization ratio of these units is not particularly limited, and should be decided as appropriate in view of separator characteristics. Vinylidene fluoride-hexafluoropropylene copolymers can be obtained through synthesis in accordance with publicly known methods, and can also be obtained as commercially available products (for example, Kynar FLEX 2850-00, 2800-00, 2800-20, 2750-01, 2500-20, 3120-50, 2851-00, 2801-00, 2821-00, 2751-00 and 2501-00 produced by Arkema Group).

Examples of suitable good solvents for the PVDF-HFP include ketones such as acetone and methyl ethyl ketone; cyclic ethers such as tetrahydrofuran; nitrogen-containing polar solvents (particularly, nitrogen-containing aprotic polar solvents) such as N,N-dimethylformamide, N,N-dimethylacetamide and N-methylpyrrolidone; and sulfur-containing polar solvents (particularly, sulfur-containing aprotic polar solvents) such as DMSO. From the perspective of ease of removal through vaporization, the good solvent is desirably acetone, methyl ethyl ketone or tetrahydrofuran, and more desirably acetone.

Examples of suitable poor solvents for PVDF-HFP include water and alcohols such as 1-hexanol, 1,3-butane diol, 1,4-butane diol, 1,5-pentane diol, 1,6-hexane diol and glycerin. From perspectives such as placing little burden on the environment, ease of procurement and ease of handling, water is desired as the poor solvent.

2. Case Where Water-insoluble Polymer Is Ethylene-vinyl Alcohol Copolymer

An ethylene-vinyl alcohol copolymer (EVOH) is a copolymer containing ethylene units and vinyl alcohol units as monomer units. The content of ethylene units in the EVOH is not particularly limited, but is desirably 10 mol% or more, more desirably 15 mol% or more, further desirably 20 mol% or more, and particularly desirably 25 mol% or more. On the other hand, the content of ethylene units in the EVOH is desirably 60 mol% or less, more desirably 50 mol% or less, and further desirably 45 mol% or less. The degree of saponification of the EVOH is not particularly limited, but is desirably 80 mol% or more, more desirably 90 mol% or more, and further desirably 95 mol% or more. The upper limit for the degree of saponification is determined by technical limitations relating to saponification and is, for example, 99.99 mol%. It should be noted that the content of ethylene units and the degree of saponification in the EVOH can be determined using a publicly known method (for example, $^1$H-NMR measurements or the like).

In addition, EVOHs are generally produced by saponifying copolymers of ethylene and vinyl esters using an alkali catalyst or the like. As a result, EVOHs can contain vinyl ester units. Vinyl esters in such units are typically vinyl acetate, and may also be vinyl formate, vinyl propionate, vinyl valerate, vinyl caprate, vinyl laurate, and the like. In addition to ethylene units, vinyl alcohol units and vinyl ester units, the EVOH may also contain other monomer units as long as the advantageous effect of the present disclosure is not significantly impaired.

Examples of suitable good solvents for the EVOH include dimethyl sulfoxide (DMSO) and mixed solvents of water and alcohols. The alcohol used in the mixed solvent is desirably propyl alcohol. The propyl alcohol may be n-propyl alcohol or isopropyl alcohol. Therefore, a particularly suitable good solvent is DMSO or a mixed solvent of water and propyl alcohol.

Examples of suitable poor solvents for the EVOH include water; alcohols; cyclic esters such as γ-butyrolactone; cyclic carbonates such as propylene carbonate; cyclic sulfones such as sulfolane; ether group-containing monools such as propylene glycol monomethyl ether, propylene glycol monoethyl ether, diethylene glycol monomethyl ether, diethylene glycol monoethyl ether and 2-ethoxyethanol; and diols such as 1,3-butane diol, 1,4-butane diol, 1,5-pentane diol and 1,6-hexane diol. Of these, cyclic esters, cyclic carbonates, cyclic sulfones and ether group-containing monools are desired, γ-butyrolactone, propylene carbonate, sulfolane and ether group-containing monools are more desired, and γ-butyrolactone and sulfolane are further desired. The solubility parameter (Hildebrand SP value) 8 of the poor solvent is desirably at least 1.6 $MPa^{1/2}$ higher than the solubility parameter 8 of the EVOH.

It should be noted that in the case of EVOH, water and alcohols are poor solvents for EVOH, but a mixed solvent of water and an alcohol (particularly, propyl alcohol) is a good solvent. Here, a mixed solvent of water and an alcohol can be regarded as a mixed solvent of a mixture of an alcohol and a reduced amount of water, which is a good solvent, with water, which is a poor solvent having a higher boiling point than this, and it is therefore possible to use only a mixed solvent of water and an alcohol in the preparation of an EVOH solution. Therefore, in the present disclosure, in cases where a solvent obtained by mixing two or more types of poor solvent for a specific water-insoluble polymer becomes a good solvent, it is possible to use only this mixed solvent including two or more types of poor solvent as a mixed solvent containing a good solvent for the water-insoluble polymer and a poor solvent for the water-insoluble polymer in order to prepare a solution.

3. Case Where Water-insoluble Polymer is Cellulose Acetate

Examples of suitable good solvents for cellulose acetate include nitrogen-containing polar solvents (particularly, nitrogen-containing aprotic polar solvents) such as N,N-dimethylformamide, N,N-dimethylacetamide and N-methylpyrrolidone; esters such as methyl formate and methyl acetate; ketones such as acetone and cyclohexanone; cyclic ethers such as tetrahydrofuran, dioxane and dioxolane; glycol derivatives such as methyl glycol and methyl glycol acetate; halogenated hydrocarbons such as methylene chloride, chloroform and tetrachloroethane; cyclic carbonates such as propylene carbonate; and sulfur-containing polar solvents (particularly, sulfur-containing aprotic polar solvents) such as DMSO. Of these, a sulfur-containing aprotic polar solvent is desired, and DMSO is more desired.

Examples of suitable poor solvents for cellulose acetate include alcohols such as 1-hexanol, 1,3-butane diol, 1,4-butane diol, 1,5-pentane diol and 1,6-hexane diol. A monohydric or dihydric alcohol having 4 to 6 carbon atoms is desired as the alcohol.

4. Case Where Water-insoluble Polymer Is Poly(vinylidene fluoride)

Examples of suitable good solvents for poly(vinylidene fluoride) include nitrogen-containing polar solvents (particularly, nitrogen-containing aprotic polar solvents) such as N,N-dimethylformamide, N,N-dimethylacetamide and N-methylpyrrolidone; and sulfur-containing polar solvents (particularly, sulfur-containing aprotic polar solvents) such as DMSO. Of these, a nitrogen-containing aprotic polar solvent is desired, and N,N-dimethylformamide is more desired.

Examples of suitable poor solvents for poly(vinylidene fluoride) include alcohols such as 1-hexanol, 1,3-butane diol, 1,4-butane diol, 1,5-pentane diol, 1,6-hexane diol and glycerin; and cyclic ethers such as tetrahydrofuran, dioxane and dioxolane. A dihydric or trihydric alcohol having 3 to 6 carbon atoms is desired as the alcohol.

The usage quantities of the water-insoluble polymer, the good solvent and the poor solvent may be selected, as appropriate, according to the types thereof being used. The mixing amount of the water-insoluble polymer is desirably 1 part by mass or more, more desirably 5 parts by mass or more, and further desirably 10 parts by mass or more, relative to 100 parts by mass of the good solvent. On the other hand, the mixing amount of the water-insoluble polymer is desirably 40 parts by mass or less, more desirably 35 parts by mass or less, and further desirably 30 parts by mass or less, relative to 100 parts by mass of the good solvent. The mixing amount of the poor solvent is desirably 3 parts by mass or more, more desirably 5 parts by mass or more, and further desirably 10 parts by mass or more, relative to 100 parts by mass of the good solvent. On the other hand, the mixing amount of the poor solvent is desirably 400 parts by mass or less, more desirably 200 parts by mass or less, and further desirably 100 parts by mass or less, relative to 100 parts by mass of the good solvent. By altering these amounts, it is possible to control the state of pores (for example, porosity, pore diameter, and the like) in an obtained porous body.

In addition to the water-insoluble polymer and the mixed solvent, the coating solution may further contain other components as long as the advantageous effect of the present disclosure is not significantly impaired.

The method for preparing the coating solution is not particularly limited. It is possible to dissolve the water-insoluble polymer in the good solvent, add the poor solvent thereto, and then homogeneously mix them. It is possible to add the water-insoluble polymer to the mixed solvent of the good solvent and the poor solvent so as to dissolve the water-insoluble polymer. The coating solution can be prepared using a publicly known stirring device, mixing device, or the like. When preparing the coating solution, it is possible to irradiate with ultrasonic waves, carry out heating, or the like. The heating temperature is, for example, not less than 40°C and not more than 100°C. It is possible to dissolve the water-insoluble polymer by heating, and then cool in such a way that the good solvent and the poor solvent do not separate. In addition, this cooling is desirably carried out so that the water-insoluble polymer does not precipitate. This is because precipitated water-insoluble polymer can be an impurity.

Next, an explanation will now be given of the coating solution coating step. Electrodes of publicly known batteries can be used without limitation as the electrode used in the coating solution coating step.

As one example, an explanation will now be given of a case in which the electrode is an electrode of a lithium secondary battery. Typically, electrodes of lithium secondary batteries include a sheet-shaped current collector and an active substance layer provided on the current collector.

In a case where the electrode is a positive electrode, the positive electrode typically includes a sheet-shaped positive electrode current collector and a positive electrode active substance layer provided on the positive electrode current collector. The positive electrode active substance layer is provided on one surface or both surfaces of the positive electrode current collector, and desirably on both surfaces of the positive electrode current collector.

For example, an aluminum foil or the like can be used as the positive electrode current collector.

The positive electrode active substance layer contains a positive electrode active substance. Lithium-transition metal oxides (for example, $LiNi_{1/3}Co_{1/3}Mn_{1/3}O_2$, $LiNiO_2$, $LiCoO_2$, $LiFeO_2$, $LiMn_2O_4$, $LiNi_{0.5}Mn_{1.5}O_4$, and the like) and lithium-transition metal phosphate compounds (for example, $LiFePO_4$ and the like) can be given as examples of the positive electrode active substance.

The positive electrode active substance layer can contain components other than the active substance, such as an electrically conductive material or a binder.

Carbon black such as acetylene black (AB) and other carbon materials (for example, graphite or the like) can be advantageously used as an electrically conductive material.

For example, poly(vinylidene fluoride) (PVdF) or the like can be used as a binder.

In a case where the electrode is a negative electrode, the negative electrode typically includes a sheet-shaped negative electrode current collector and a negative electrode active substance layer provided on the negative electrode current collector. The negative electrode active substance layer is provided on one surface or both surfaces of the negative electrode current collector, and desirably on both surfaces of the negative electrode current collector.

For example, a copper foil or the like can be used as the negative electrode current collector.

The negative electrode active substance layer contains a negative electrode active substance. For example, a carbon material such as graphite, hard carbon or soft carbon can be used as the negative electrode active substance. The graphite can be natural graphite or artificial graphite, and may be amorphous carbon-coated graphite in a form whereby graphite is coated with an amorphous carbon material.

The negative electrode active substance layer can contain components other than the active substance, such as a binder or a thickening agent.

For example, a styrene-butadiene rubber (SBR) or the like can be used as a binder. For example, carboxymethyl cellulose (CMC) or the like can be used as a thickening agent.

The electrode may be a positive electrode or a negative electrode. Because the negative electrode active substance layer has a larger area than the positive electrode active substance layer in the lithium secondary battery, it is desirable to provide the separator layer on the negative electrode active substance layer. Therefore, the electrode used in the coating solution coating step is desirably a negative electrode.

In the coating solution coating step, the thus prepared coating solution is coated on an electrode. In the case of the lithium secondary battery electrode explained above, the coating solution is coated on an active substance layer of the electrode.

The coating method is not particularly limited. The coating solution can be coated using a publicly known coating apparatus, such as a die coater, a slit coater, a comma coater, a gravure coater or a bar coater.

The coating amount should be decided as appropriate in view of the desired thickness of the separator layer and the solid content concentration in the coating solution.

It should be noted that the coating solution coated in the coating solution coating step is a solution of the water-insoluble polymer, and phase separation does not occur in the coating solution. Therefore, the turbidity of the coating solution, as measured using a nephelometer, is generally 50 NTU or less.

Next, an explanation will be given of the mixed solvent removal step. In the mixed solvent removal step, the good solvent and the poor solvent are removed by vaporization (particularly, volatilization). A porous skeleton of the water-insoluble polymer is formed in this mixed solvent removal step. In this mixed solvent removal step, a porous separator layer is formed through formation of pores as a result of the procedure for removing the mixed solvent, and more specifically as a result of vaporization of the poor solvent. Typically, pores are formed by, for example, phase separation between the water-insoluble polymer and the mixed solvent in which the poor solvent has become highly concentrated. Specifically, because the poor solvent has a higher boiling point than the good solvent, the good solvent is preferentially vaporized ahead of the poor solvent in this step. As the amount of good solvent decreases, the concentration of the poor solvent in the mixed solvent increases. Because the solubility of the water-insoluble polymer in the poor solvent is lower than in the good solvent, phase separation occurs between the water-insoluble polymer and the mixed solvent in which the poor solvent has become highly concentrated, and a porous skeleton of the water-insoluble polymer is formed. This phase separation may be spinodal decomposition. Finally, the good solvent is removed, the water-insoluble polymer is precipitated, the high boiling point poor solvent is removed through vaporization, and pores are produced. In this way, a separator layer that is a porous body of the water-insoluble polymer is formed. It should be noted that the type and usage quantity of the good solvent and the type and usage quantity of the poor solvent may be appropriately selected in order to cause phase separation between the water-insoluble polymer and the mixed solvent in which the poor solvent has become highly concentrated.

Examples of methods for vaporizing the mixed solvent of the good solvent and the poor solvent include methods involving heating, methods involving leaving in a vacuum, methods involving heating under reduced pressure and methods involving air drying. These methods can be carried out in the same way as publicly known drying methods. From the perspective of ease of carrying out the procedure, a method involving heating is desired. The heating temperature is not particularly limited, and may be decided, as appropriate, according to the type of solvent and the heating time. The heating temperature is desirably a temperature at which the mixed solvent does not boil and the water-insoluble polymer and the poor solvent do not decompose. The heating temperature is, for example, 25°C or higher, desirably 30°C or higher, more desirably 50°C or higher, and further desirably 70°C or higher. On the other hand, the heating temperature is, for example, 180°C or lower, desirably 140°C or lower, and more desirably 125°C or lower. In cases where a highly volatile solvent is used, the heating temperature may be approximately 30°C to 60°C. The heating time may be decided, as appropriate, according to the type of solvent and the heating temperature. It is desirable for the electrode on which the coating solution has been coated to remain still while the good solvent and the poor solvent are vaporized.

A separator-integrated electrode can be obtained in the manner described above. The separator layer has a three dimensional network-like porous structure in which pores are connected from one main surface of the separator layer to the opposing main surface. According to the production method of the present disclosure, it is possible to obtain a separator layer having an average pore diameter of, for example, 0.5 $\mu$m or more (particularly, 0.9 $\mu$m or more or even 1.4 $\mu$m or more) and 5 $\mu$m or less (particularly, 4.2 $\mu$m or less or even 3.8 $\mu$m or less). It should be noted that the average pore diameter can be determined by obtaining an electron microscope photograph of a cross section of the separator layer and calculating the average value of the diameters of 100 or more pores. In cases where the cross section of a pore is aspherical, the average value of the maximum diameter and minimum diameter of the pore may be taken to be the pore diameter. In addition, according to the production method of the present disclosure, it is possible to obtain a separator layer having a porosity of, for example, 25% or more (particularly, 40% or more or even 50% or more) and less than 80% (particularly, 75% or less or even 65% or less). It should be noted that the porosity can be calculated in accordance with a publicly known method using the true density and the apparent density.

In the present disclosure, procedures for carrying out the coating solution preparation step, the coating solution coating step and the mixed solvent removal step are very simple. Therefore, it can be understood that according to the present disclosure, a separator-integrated electrode can be easily produced using a water-insoluble polymer.

A separator-integrated electrode produced in the manner described above can be used in a variety of batteries according to publicly known methods.

A lithium secondary battery is desired as a battery, and such lithium secondary batteries can be advantageously used as portable power sources for personal computers, handheld devices, and the like, and as motive power sources for vehicles such as electric vehicles (EV), hybrid vehicles (HV) and plug-in hybrid vehicles (PHV).

Examples

Explanations will now be given of examples relating to the present disclosure, but it is not intended that the present disclosure is limited to these examples.

Example 1

Into a sample bottle, 2 g of a vinylidene fluoride-hexafluoropropylene copolymer (Kynar-FLEX 2821-00 produced by Arkema Group; grade: powder type; hereinafter abbreviated to "PVDF-HFP") was weighed out. To this was added 10 g of acetone as a good solvent and 1 g of water as a poor solvent. A coating solution was obtained by heating the sample bottle to 40°C to 50°C and stirring until the PVDF-HFP completely dissolved in these solvents.

A negative electrode paste was prepared by mixing graphite (C) (SMG-TH5 produced by Hitachi Chemical Co., Ltd.) as a negative electrode active substance, a styrene butadiene rubber (SBR) (TRD 104B produced by JSR Corporation) as a binder and carboxymethyl cellulose (CMC) (MAC800LC produced by Nippon Paper Industries Co., Ltd.) as a thickening agent with ion exchanged water at quantities whereby the C:SBR:CMC mass ratio was 98:1:1. This negative electrode paste was coated in a band-like shape on both surfaces of a long strip-shaped copper foil, dried, and then pressed. A negative electrode sheet having a negative electrode active substance layer formed on a copper foil was obtained in this way. The thickness of the negative electrode active substance layer on each surface was 66 $\mu$m, and the coating weight on each surface was 3.30 mg/cm$^2$.

The coating solution was cooled to 25°C and coated on the negative electrode active substance layer of the negative electrode sheet by means of casting. At this time, the coating thickness was 100 $\mu$m to 200 $\mu$m.

A separator-integrated electrode was obtained by placing this in a drying oven set to 40°C and vaporizing the good solvent and the poor solvent.

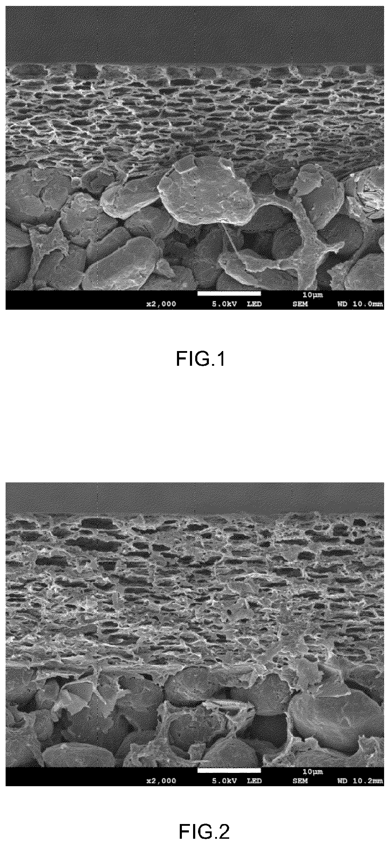

A cross section of the obtained separator-integrated electrode was observed using a scanning electron microscope (SEM), and thus it could be confirmed that a porous separator layer was formed on the electrode. This SEM photograph is shown in FIG. 1.

A separator layer portion of this separator-integrated electrode was punched out at a diameter $\varphi$ of 25 mm, the weight and thickness of this portion were measured, and the porosity was calculated using the true density of the PVDF-HFP used. As a result, the porosity of the separator layer was 58.9%.

Example 2

A separator-integrated electrode was obtained in the same way as in Example 1, except that the amount of PVDF-HFP was changed to 2.5 g. A cross section of the obtained separator-integrated electrode was observed using a SEM, and thus it could be confirmed that a porous separator layer was formed on the electrode. This SEM photograph is shown in FIG. 2. The porosity was determined in the same way as in Example 1, and thus the porosity of the separator layer was 51.5%.

Example 3

Into a sample bottle, 1 g of an ethylene-vinyl alcohol copolymer ("Eval L171B" available from Kuraray Co., Ltd.; ethylene content 27 mol%, hereinafter abbreviated to "EVOH") was weighed out. To this was added 5 mL of a mixed solvent containing water and n-propyl alcohol (nPA) at a volume ratio of 7:3 as a good solvent and 1 mL of y-butyrolactone (GBL) as a poor solvent. A coating solution was obtained by heating the sample bottle to 70°C to 80°C and stirring until the EVOH completely dissolved in these solvents.

A negative electrode sheet was obtained in the same way as in Example 1.

The coating solution was cooled to 25°C and coated on the negative electrode active substance layer of the negative electrode sheet by means of casting. At this time, the coating thickness was 100 $\mu$m to 200 $\mu$m.

A separator-integrated electrode was obtained by placing this in a drying oven set to 120°C and vaporizing the good solvent and the poor solvent.

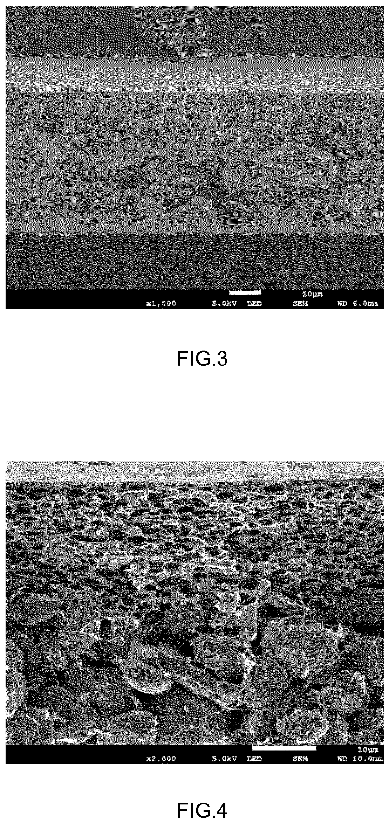

A cross section of the obtained separator-integrated electrode was observed using a SEM, and thus it could be confirmed that a porous separator layer was formed on the electrode. This SEM photograph is shown in FIG. 3.

The porosity was determined in the same way as in Example 1, and thus the porosity of the separator layer was 58.2%.

Example 4

A separator-integrated electrode was obtained in the same way as in Example 3, except that 5 mL of a mixed solvent containing water and n-propyl alcohol (nPA) at a volume ratio of 5:5 was used as the good solvent and 2 mL of $\gamma$-butyrolactone (GBL) was used as the poor solvent. A cross section of the obtained separator-integrated electrode was observed using a SEM, and thus it could be confirmed that a porous separator layer was formed on the electrode. This SEM photograph is shown in FIG. 4. The porosity was determined in the same way as in Example 1, and thus the porosity of the separator layer was 61.2%.

Example 5

A separator-integrated electrode was obtained in the same way as in Example 3, except that 1 g of EVOH was dissolved in 5 mL of a mixed solvent containing water and n-propyl alcohol (nPA) at a volume ratio of 5:5 as a mixed solvent of a good solvent and a poor solvent. The porosity was determined in the same way as in Example 1, and thus the porosity of the separator layer was 29.6%.

Example 6

A separator-integrated electrode was obtained in the same way as in Example 3, except that 1 g of EVOH was dissolved in 5 mL of a mixed solvent containing water and n-propyl alcohol (nPA) at a volume ratio of 7:3 as a mixed solvent of a good solvent and a poor solvent. The porosity was determined in the same way as in Example 1, and thus the porosity of the separator layer was 33.0%.

Example 7

A separator-integrated electrode was obtained in the same way as in Example 3, except that 5 mL of dimethyl sulfoxide (DMSO) was used as the good solvent and 2.5 mL of γ-butyrolactone (GBL) was used as the poor solvent. The porosity was determined in the same way as in Example 1, and thus the porosity of the separator layer was 52.7%.

Example 8

A separator-integrated electrode was obtained in the same way as in Example 3, except that 4 mL of dimethyl sulfoxide (DMSO) was used as the good solvent and 2.5 mL of propylene carbonate (PC) was used as the poor solvent. The porosity was determined in the same way as in Example 1, and thus the porosity of the separator layer was 46.7%.
From the results above, it can be understood that according to the present disclosure, a separator-integrated electrode can be easily produced using a water-insoluble polymer.

**Claims**

1. A method for producing a separator-integrated electrode, the method comprising the steps of:

     preparing a coating solution in which a water-insoluble polymer is dissolved in a mixed solvent containing a good solvent for the water-insoluble polymer and a poor solvent for the water-insoluble polymer;
     coating the coating solution on an electrode; and
     vaporizing and removing the mixed solvent from the coating solution coated on the electrode, wherein
     a boiling point of the poor solvent is higher than a boiling point of the good solvent, and
     a porous separator layer is formed by removing the mixed solvent through the vaporization and thereby forming pores.

2. The method for producing a separator-integrated electrode according to claim 1, wherein the water-insoluble polymer is a vinylidene fluoride-hexafluoropropylene copolymer.

3. The method for producing a separator-integrated electrode according to claim 2, wherein the poor solvent is water.

FIG.1

FIG.2

FIG.3

FIG.4

Europäisches
Patentamt

European
Patent Office

Office européen
des brevets

## EUROPEAN SEARCH REPORT

Application Number

EP 21 15 8892

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 805 298 A1 (TOYOTA MOTOR CO LTD [JP]) 14 April 2021 (2021-04-14) * paragraphs [0049], [0055] - [0057], [0062]; claim all; example all * ----- | 1-3 | INV. H01M50/403 H01M10/052 H01M50/426 H01M50/46 |
| X | US 2020/044217 A1 (MINAKUCHI AKIO [JP] ET AL) 6 February 2020 (2020-02-06) | 1,3 | |
| Y | * paragraphs [0002], [0006], [0010] - [0012]; claim all * ----- | 2 | |
| Y | US 2013/280583 A1 (LEE JOO-SUNG [KR] ET AL) 24 October 2013 (2013-10-24) | 2 | |
| A | * claim all; examples 1,2 * ----- | 1,3 | |

TECHNICAL FIELDS
SEARCHED        (IPC)

H01M

The present search report has been drawn up for all claims

| Place of search | Date of completion of the search | Examiner |
|---|---|---|
| Munich | 21 July 2021 | Götz, Heide |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 8892

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2021

| Patent document cited in search report | | Publication date | Patent family member(s) | | Publication date |
|---|---|---|---|---|---|
| EP 3805298 | A1 | 14-04-2021 | CN | 112646423 A | 13-04-2021 |
| | | | EP | 3805298 A1 | 14-04-2021 |
| | | | JP | 2021059687 A | 15-04-2021 |
| | | | KR | 20210042252 A | 19-04-2021 |
| | | | US | 2021108043 A1 | 15-04-2021 |
| US 2020044217 | A1 | 06-02-2020 | CN | 110808348 A | 18-02-2020 |
| | | | JP | 2020024811 A | 13-02-2020 |
| | | | US | 2020044217 A1 | 06-02-2020 |
| US 2013280583 | A1 | 24-10-2013 | CN | 103814460 A | 21-05-2014 |
| | | | EP | 2779275 A1 | 17-09-2014 |
| | | | JP | 6251680 B2 | 20-12-2017 |
| | | | JP | 2014530472 A | 17-11-2014 |
| | | | KR | 20130052526 A | 22-05-2013 |
| | | | TW | 201324923 A | 16-06-2013 |
| | | | TW | 201528591 A | 16-07-2015 |
| | | | US | 2013280583 A1 | 24-10-2013 |
| | | | WO | 2013070031 A1 | 16-05-2013 |

EPO FORM P0459

For more details about this annex : see Official Journal of the European Patent Office, No. 12/82

**EP 3 876 340 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020038451 A

- JP 2019079822 A